**Europäisches Patentamt**

**European Patent Office**

**Office européen des brevets**

(19)

(11) Veröffentlichungsnummer: **0 179 988**
**B1**

(12) # EUROPÄISCHE PATENTSCHRIFT

(45) Veröffentlichungstag der Patentschrift: **06.06.90**

(21) Anmeldenummer: **85109665.1**

(22) Anmeldetag: **01.08.85**

(51) Int. Cl.⁵: **H 04 L 7/02, H 03 L 7/00**

(54) Schaltungsanordnung zum Synchronisieren des empfangsseitig erzeugten Taktsignals mit bei digitaler Informationsübertragung empfangenen Taktsignale in Fernmeldeanlagen.

(30) Priorität: **27.08.84 DE 3431419**

(43) Veröffentlichungstag der Anmeldung:
**07.05.86 Patentblatt 86/19**

(45) Bekanntmachung des Hinweises auf die
Patenterteilung:
**06.06.90 Patentblatt 90/23**

(84) Benannte Vertragsstaaten:
**FR GB NL SE**

(56) Entgegenhaltungen:
**WO-A-83/02045**
**DE-A-3 200 491**
**DE-B-1 287 609**

(73) Patentinhaber: **TELENORMA Telefonbau und
Normalzeit GmbH
Mainzer Landstrasse 128-146
D-6000 Frankfurt am Main (DE)**

(72) Erfinder: **Artun, Berkan, Dipl.-Ing.
Landwehrstrasse 6
D-6100 Darmstadt (DE)**
Erfinder: **Goy, Helmut, Dipl.-Ing.
Am Lindenbaum 13
D-6969 Nidderau 1 (DE)**

EP 0179988 B1

Courier Press, Leamington Spa, England.

**Beschreibung**

Die Erfindung betrifft eine Schaltungsanordnung zum Synchronisieren des empfangsseitig erzeugten Taktsignals mit bei digitaler Informationsübertragung empfangenen Taktsignalen in Fernmeldeanlagen, wie dies im Oberbegriff des Patentanspruches 1 näher bezeichnet ist.

Bei der Übertragung von digitalen, binärcodierten Informationen besteht eine Aufgabe darin, den Sendetakt der entfernten Datenquelle auf der Empfangsseite nach Frequenz-und Phasenlage wieder zu gewinnen. Nur so ist es möglich, die empfangenen Daten auf der Empfangsseite jeweils in der Zeichenmitte nach ihrem Informationsgehalt abzufragen und in einem eindeutigen Taktraster weiter zu verarbeiten. Eine Synchronisierung kann auch erreicht werden, indem zusätzliche Synchronisierzeichen zusammen mit den die Information enthaltenen Binärzeichen übertragen werden. Dadurch wird jedoch die Anzahl der zu übertragenden Zeichen vergrößert, wodurch möglicherweise eine Erhöhung der Übertragungsgeschwindigkeit erforderlich wird.

Deshalb ist es zweckmäßiger, Synchronisierkriterien aus den digitalen Informationen selbst zu gewinnen, wie dies aus der DE—AS 12 87 609 bekannt ist. Das dort beschriebene Verfahren und die Anordnung zur Schrittsynchronisation in Synchronübertragungssystemen sieht vor, daß einer Steuerschaltung in Abhängigkeit von der Phasenlage des Empfangssignals zu der Phasenlage einer von einem Frequenzgenerator erzeugten Frequenz entweder eine niedrigere oder eine höhere Frequenz zugeführt wird, um eine Taktteilerkette zu steueren. Zu diesem Zweck ist eine Anordnung zum Erzeugen von Vergleichsimpulsen vorgesehen, womit die Steuereinrichtung auf die höhere Frequenz umgeschaltet wird, wenn ein Vergleichsimpuls erscheint. Dabei wird die höhere Frequenz vom Frequenzgenerator direkt geliefert und die niedrigere Frequenz durch eine bistabile Teilerstufe gewonnen. Die niedrigere Frequenz wird also normalerweise der Teilerkette zugeführt, und nur dann, wenn eine Nachregeleung erfolgen muß, wird die höhere Frequenz an die Steuerschaltung angelegt. Das Fortschalten der Teilerkette wird dadurch beschleunigt, wobei die Phasenlage in positiver Richtung verändert wird. Für das Verzögern der Phasenlage ist vorgesehen, daß beim Auftreten eines Vergleichsimpulses vorübergehend Taktsignale der halben Frequenz ausgeblendet werden, so daß die Teilerkette verzögert wird.

Die Synchronisation erfolgt also bei diesem bekannten Verfahren ausschließlich digital, wobei der Frequenzgenerator selbst nicht beeinflußt wird. Dadurch ist eine Synchronisation nur in den Schritten möglich, die durch die Taktfrequenz und die doppelte, vom Frequenzgenerator erzeugte Frequenz vorgegeben sind. Außerdem könnte das Ausgangssignal der Anordnung in unzulässiger Weise verändert werden, wenn das empfangene Signal Lücken aufweist, weil dann die Synchronisierungsmaßnahmen nicht rechtzeitig beendet werden können.

Aus der DE—OS 32 00 491 ist ein phasentoleranter Bitsynchronisierer für digitale Signale bekannt. Dort sind zwei Flip Flops vorgesehen, welche von einem örtlichen Taktgeber mit einer Phasenverschiebung von 180 Grad angesteuert werden. Der örtliche Taktgeber arbeitet dabei mit der gleichen Taktfrequenz, wie sie vom Empfangssignal angeboten wird. Dabei ist eines der Flip Flops für eine Beschleunigung des Taktgebers und das andere Flip Flop für eine Verzögerung des Taktgebers vorgesehen. Bei dieser Schaltungsanordnung können Steuersignale für die Beschleunigung oder Verzögerung des örtlichen Taktgebers nur dann erzeugt werden, wenn Bitwechsel stattfinden. Deshalb sind zusätzliche Komponenten zum Aufrechterhalten der Phasenverriegelung vorgesehen. Dadurch wird der mittlere Signalwert eines R-C Filters aufrechterhalten, wenn keine Ausgangssignale von den mit den Flip Flops verbundenen Exklusiv — oder — Gattern geliefert werden. Da bei einer derartigen Schaltungsanordnung die Steuerspannung zur Bestimmung der Phasenlage des örtlichen Taktgebers beibehalten wird, kann es bei länger aussetzenden Bitwechseln dazu kommen, daß eine erhebliche Phasenabweichung entsteht. Es dauert dann relativ lange, bis durch die dann laufend erzeugten Impulse zur Beschleunigung oder Verzögerung des Taktgebers der Synchronzustand wieder hergestellt ist.

Die Aufgabe der vorliegenden Erfindung besteht darin, eine Schaltungsanordnung anzugeben, womit ein empfangsseitig anordneter Taktgeber direkt beeinflußt werden kann, wobei auch bei lückenhaften Empfangssignalen eine schnell einsetzende Synchronisierung erreicht wird.

Diese Aufgabe wird durch eine Merkmalskomination gelöst, wie sie im Patentanspruch 1 angegeben ist. Damit wird in vorteilhafter Weise erreicht, daß beim Auftreten einer Lücke im Empfangssignal die Synchronisierung nicht be liebig lange fortgesetzt sondern rechtzeitig abgeschaltet wird, und daß beim Entstehen eines Fehlers dieser Fehler sofort wieder ausgeglichen wird, sobald das Empfangssignal wieder erscheint. Weiterbildungen der Erfindung ergeben sich aus den Unteransprüchen.

Ein Ausführungsbeispiel der Erfindung wird nachfolgend anhand von Zeichnungen näher erläutert.

Es zeigt

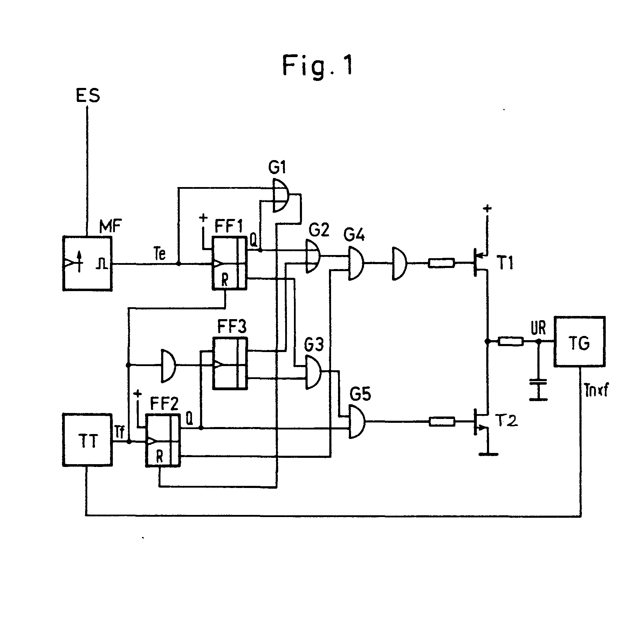

Fig. 1 den Stromlaufplan der Schaltungsanordnung

Fig. 2 ein Impulsdiagramm

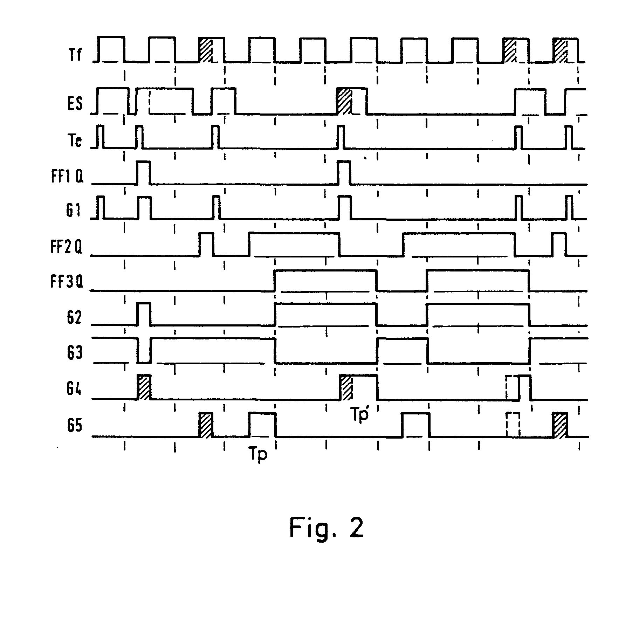

Das Eingangssignal ES wird einem Monoflop MF zugeführt, das bei jeder positiven Flanke einen Impuls Te vorgegebener Länge abgibt. Wenn dieser Impuls Te an den Eingang des ersten Flip-Flops FF1 gelangt, bevor das von einem Taktteiler TT kommende, vom Taktgeber TG stammende Rücksetzsignal anliegt, so gelangt das erste Flip-Flop FF1 in seine Arbeitslage. Über das ODER-Gatter G1 wird verhindert, daß das zweite Flip-Flop FF2 gesetzt werden kann. Mit dem logischen Ausgangssignal des ersten Flip-Flops FFI wird über die Verknüpfungsgatter G2 und G4 der Transistor TI des Spannungsschalters aufgesteuert, so daß die Regelspannung UR für den Taktgeber TG ansteigt. Bei entsprechender Ausgestaltung des Taktgebers TG hat dies zur Folge, daß die Ausgangsfrequenz Tnxf erhöht wird, so daß die Phasenlage des empfangsseitig erzeugten Taktes an die phasenlage des Empfangssignals ES herangeführt wird. In der Fig. 2 sind die entsprechenden Impulsbilder dargestellt, woraus man erkennen kann, daß das Gatter G4 immer dann ein Signal abgibt, wenn das erste Flip-Flop FF1 in seine Arbeitslage gerät.

Das erste Flip-Flop FF1 wird zwangsweise zurückgesetzt, wenn der Ausgang des Taktteilers TT ein positives Signal abgibt. Es ist also immer so lange in der Arbeitslage, wie die positive Taktflanke des Eingangssignals ES der gleichartig positiven Taktflanke des Taktteilers TT vorauseilt. Kommt aber die positive Flanke des Taktes Tf vom Taktteiler TT früher als die Taktflanke des Eingangssignals ES, so gerät das zweite Flip-Flop FF2 in seine Arbeitslage, undes wird verhindert, daß das erste Flip-Flop FFI in seine Arbeitslage gerät, so lange der vom Taktteiler TT kommende Takt Tf positiv ist. Wird aufgrund einer positiven Taktflanke des Eingangssignals ES vom Monoflop MF ein Takt Te gebildet, so wird das zweite Flip-Flop FF2 wieder in seine Ruhelage zurück versetzt. Während der Arbeitslage des zweiten Flip-Flops FF2 gibt, wie dies aus dem Impulsdiagramm in Fig. 2 ersichtlich ist, das Gatter G5 einen Impuls gleicher Länge ab, womit der Transistor T2 des Spannungsschalters aufgesteuert wird. Dadurch wird die Regelspannung UR für den Taktgeber TG verringert, so daß die Frequenz des Taktes Tnxf abnimmt. Somit wird auch in diesem Fall die Phasenlage des Taktgeber TG an die Phasenlage des Eingangssignals ES herangeführt.

Bei einem lückenhaften Eingangssignal ES, wie es in der Mitte des Impulsdiagramms angegeben ist, gerät zunächst das zweite Flip-Flop FF2 in seine Arbeitslage, weil der aus dem Taktteiler TT kommende Takt Tf eher da ist als eine Taktflanke des Eingangssignals ES. Dauert dieser Zustand länger an als eine halbe Taktperiode des Taktteilers TT, so wird infolge der Arbeitsstellung des zweiten Flip-Flops FF 2 auch das dritte Flip-Flop FF3 in seine Arbeiteslage geraten, weil es von der invertierten Taktflanke des Taktes Tf vom Taktteiler TT gesteuert wird. Dieser Zustand bleibt so lange erhalten, bis das Eingangssignal ES wieder erscheint. Wenn sich das zweite Flip-Flop FF2 zusammen mit dem dritten Flip-Flop FF3 in der Arbeitslage befindet, sind beide Verknüpfungsgatter G4 und G5 gesperrt, so daß alle beide Transistoren T1 und T2 des Spannungsschalters gesperrt sind, wodurch die Regelspannung UR auf dem zuvor eingestellten Wert erhalten bleibt. Dieser Zustand bleibt bestehen, bis das Eingangssignal ES wieder auftritt.

Wie aus Fig. 2 hervor geht, entsteht beim Ausbleiben des Eingangssignals ES am Verknüpfungsgatter G5 ein Impuls, der die Dauer einer halben Taktperiode des aus dem Taktteiler TT stammenden Taktes Tf hat, weil das dritte Flip-Flop FF3 erst umdiese Zeit später in seine Arbeitslage gerät. Für diese Zeit wird also die Regelspannung UR für den Taktgeber TG zu weit nach unten geregelt. Dieser Fehler wird wieder ausgeglichen, sobald das Eingangssignal ES erscheint, indem dann das dritte Flip-Flop FF3 eine halbe Taktperiode nach dem zweiten Flip-Flop FF2 abgeschaltet wird, wodurch über die Gatter G2 und G4 der erste Transistor T1 des Spannungsschalters für die gleiche Zeit länger geöffnet wird, so daß die Regelspannung UR um den gleichen Wert wieder ansteigt, um den sie zuvor zuviel abgesenkt wurde.

Ist jedoch beim Wiederbeginn des Empfangssignals ES die Phasenlage so, daß nur einegeringe-Voreilung des empfangenen Taktes Te gegenüber dem Takt TF vom Taktteiler TT vorliegt, so wird durch das zweite Flip-Flop FF2, welches dann in seine Arbeitslage gerät, der positive Regelimpuls für die Regelspannung UR am Gatter G4 abgesperrt. Derartige Kriterien sind dargestellt in der Fig. 2 jeweils am Ende der Impulsbilder.

Mit der vorliegenden Schaltungsanordnung wird also erreicht, daß beim Wiedererscheinen des Empfangssignals ES nach einer Lücke sich in sehr kurzer Zeit die Phasenlage des Taktgebers TG auf die Phasenlage des Empfangssignals ES einstellt.

**Patentansprüche**

1. Schaltungsanordnung zum Synchronisieren des empfangsseitig erzeugten Taktsignals mit bei digitaler Informationsübertragung empfangenen Taktsignalen in Fernmeldeanlagen, wobei auf der Empfangsseite ein mit der Frequenz des empfangenen Taktes oder einem ganzzahligen Vielfachen davon arbeitender Taktgeber vorgesehen ist, dessen Phasenlage mit der Phasenlage des empfangenden Taktes in Übereinstimmung gehalten werden muß und diese Regelung mit einer dem Taktgeber zugeführten veränderbaren Regelspannung erfolgt, wozu zwei Flip Flops vorgesehen sind, um eine Beschleunigung oder Verzögerung des Taktgebers zu bewirken, dadurch gekennzeichnet, daß ein zusätzliches drittes Flip Flop (FF3) vorgesehen ist, welches nur bei lückenhaften Empfangssignalen (ES) anspricht und eine weitergehende Verzögerung des Taktgebers (TG) verhindert, indem dann die Regelspannung (UR) auf dem zuletzt eingestellten Wert beibehalten wird, daß dieses dritte Flip Flop (FF3) mit einer Taktflanke gesteuert wird, die eine halbe Taktperiode (Tp) später liegt, als die Flanke des Taktes (Tf) für die Steuerung des zweiten Flip Flops (FF2), wodurch beim Ausbleiben des Empfangssignals (ES) noch eine Verzögerung des Taktgebers (TG) während dieser halben Taktperiode (Tp) erfolgt, und daß die Schaltungsanordnung so ausgestaltet ist, daß beim Wiedereinsetzen des Empfangssignals (ES) diese halbe Taktperiode (Tp) für die Beschleunigung des Taktgebers (TG) wieder hinzugefügt wird, indemdurch eine Verknüpfungslogik (G2, G4) ein Spannungsschalter (T1) entsprechend länger angesteuert wird.

2. Schaltungsanordnung nach Anspruch 1, dadurch gekennzeichnet, daß durch die Verknüpfungslogik (G2 bis G5) die Spannungsschalter (T1, T2) so gesteuert werden, daß die Regelspannung (UR) bei der Arbeitslage des ersten Flip Flops (FF1) zur Beschleunigung des Taktgebers (TG) verändert wird, bei der Arbeitslage nur des zweiten Flip Flops (FF2) zur Verzögerung des Taktgebers (TG) verändert wird, und beim hinzukommenden Ansprechen des dritten Flip Flops (FF3) unverändert bleibt.

3. Schaltungsanordnung nach Anspruch 1, dadurch gekennzeichnet, daß das Empfangssignal (ES) einem Monoflop (MF) zugeführt wird, das zu Beginn einer jeden Taktperiode einen Impuls (TE) definierter Länge abgibt.

4. Schaltungsanordnung nach Anspruch 3, dadurch gekennzeichnet, daß die Wirkung des Monoflops (MF) durch die Zusammenschaltung von Flip-Flops erreicht wird.

6. Schaltungsanordnung nach Anspruch 1, dadurch gekennzeichnet, daß ein ODER-Gatter (GI) vorgesehen ist, dessen Eingänge mit dem Takteingang und dem Ausgang (Q) des ersten Flip-Flops (FFI) verbunden sind, und dessen Ausgang den Rücksetzeingang (R) des zweiten Flip-Flops (FF2) mit einem definierten Impuls beaufschlagt.

**Revendications**

1. Circuit pour synchroniser le signal de rythme généré côté réception avec les signaux de rythme reçus en cas de transmission numérique d'informations dans des installations de télécommunication, avec prévision, côté réception, d'un générateur de rythme fonctionnant à la fréquence du rythme reçu ou à un multiple entier de ce rythme, générateur dont la position de phase doit être maintenue en concordance avec la position de phase du rythme reçu, cette régulation s'opérant à l'aide d'une tension de réglage variable appliquée au générateur de rythme, avec prévision dedeux bascules pour produire une accélération ou un ralentissement du générateur de rythme, caractérisé en ce qu'une troisième bascule (FF3) est prévue en plus, laquelle réagit seulement lorsque les signaux de réception (ES) présentent des lacunes, et empêche alors la poursuite du ralentissement du générateur de rythme (TG), du fait que la tension de réglage (UR) est maintenue en pareil cas à la valeur établie en dernier, que cette troisième bascule (FF3) est commandée par un flanc d'impulsion de rythme qui intervient plus tard, d'une demi-période de rythme (Tp), que le flanc de l'impulsion de rythme (Tf) pour la commande de la deuxième bascule (FF2), si bien que, en cas d'absence du signal de réception (ES) il se produit encore un ralentissement du générateur de rythme (TG) pendant cette demi-période de rythme (Tp), et que le circuit est agencé de manière qu'à la réapparition du signal de réception (ES), cette demi-période de rythme (Tp) soit de nouveau rajoutée pour l'accélération du générateur de rythme (TG), du fait qu'une logique combinatoire (G2, G4) commande un interrupteur de tension (T1) pendant une durée prolongée en conséquence.

2. Circuit selon la revendication 1, caractérisé en ce que la logique combinatoire (G2 à G5) commande les interrupteurs de tension (T1, T2) de manière que la tension de réglage (UR) soit modifiée, à l'état de travail de la première bascule (FF1), en vue de l'accélération du générateur de rythme (TG), qu'elle soit modifiée, à l'état de travail de la seule deuxième bascule (FF2), en vue du ralentissement du générateur de rythme (TG) et qu'elle reste inchangée lorsque la troisième bascule (FF3) réagit en plus.

3. Circuit selon la revendication 1, caractérisé en ce que le signal de réception (ES) est appliqué à un basculeur monostable (MF) qui, au début de chaque période de rythme, délivre une impulsion (Te) de longueur définie.

4. Circuit selon la revendication 3, caractérisé en ce que l'action du basculeur monostable (MF) est produite par l'interconnexion de bascules.

5. Circuit selon la revendication 1, caractérisé en ce qu'il comprend une porte OU (G1) dont les entrées sont reliées à l'entrée de rythme et à la sortie (Q) de la première bascule (FF1) et dont la sortie applique une impulsion définie à l'entrée de remise à l'état de repos (R) de la deuxième bascule (FF2).

**Claims**

1. Circuit arrangement for synchronising the clock pulse signal generated at the receiving end with clock pulse signals received for digital information transmission in communications systems, wherein a pulse generator is provided at the receiving end, which pulse generator operates at the frequency of the received clock pulse or an integral multiple thereof and the phase position of which must be kept in agreement with the phase position of the received clock pulse, wherein this regulation takes place by a variable regulating voltage fed to the pulse generator, for which purpose two flip-flops are provided to effect an acceleration or retardation of the clock pulse generator, characterised thereby, that an additional third flip-flop (FF3) is provided, which responds in the case of only incomplete received signals (ES) and prevents a continued retardation of the clock pulse generator (TG) in that the regulating voltage (UR) is then maintained at the last set value, that this third flip-flop (FF3) is controlled by a pulse edge which lies half a pulse period (Tp) later than the edge of the pulse (Tf) for the control of the second flipflop (FF2), whereby a retardation of the clock pulse generator (TG) still takes place during this half pulse period (Tp) in the absence of the received signal (ES) and that the circuit arrangement is so structured that this half pulse period (TP) is again added for the acceleration of the clock pulse generator (TG) on the restoration of the received signal (ES) in that a voltage switch (T1) is driven correspondingly longer by an interlinking logic system (G2, G4).

2. Circuit arrangement according to claim 1, characterised thereby, that the voltage switches (T1, T2) are so controlled by the interlinking logic system (G2 to G5) that the regulating voltage (UR) is varied for acceleration of the clock pulse generator (TG) in the operative position of the first flip-flop (FF1), varied for retardation of the clock pulse generator (TG) in the operative position of only the second flip-flop (FF2) and remains unchanged on the additional response of the third flip-flop (FF3).

3. Circuit arrangement according to claim 1, characterised thereby, that the received signal (ES) is fed to a monostable flip-flop (MF), which supplies a pulse (TE) of defined length at the beginning of each pulse period.

4. Circuit arrangement according to claim 3, characterised thereby, that the effect of the monostable flip-flop (MF) is obtained by the connection together of flip-flops.

5. Circuit arrangement according to claim 1, characterised thereby, that an OR-gate (G1) is provided, the inputs of which are connected with the clock pulse input and the output (Q) of the first flip-flop (FF1) and the output of which acts by a defined pulse on the reset input (R) of the second flip-flop (FF2).

# Fig.1

Fig. 2

2